# EUROPEAN PATENT SPECIFICATION

(11) **EP 1 639 882 B1**
(45) Date of publication and mention of the grant of the patent: **28.04.2010**
(21) Application number: 05108681.7
(22) Date of filing: 20.09.2005
(51) Int. Cl.: A01F 15/07

(54) **Device for cleaning a bale forming roller of a round baler**
Vorrichtung für die Reinigung der Walze einer Rundballenpresse
Appareil pour nettoyer un rouleau d'une presse à balle ronde

(30) Priority: 24.09.2004 IT BO20040596
(43) Date of publication of application: 29.03.2006
(73) Proprietor: Gallignani S.p.A., 48026 Russi RA (IT)
(72) Inventor: Ravaglia, Paolo, 48012, Glorie di Bagnacavallo RA (IT)
(74) Representative: Modiano, Micaela Nadia

(56) References cited:
- DE-U1- 29 515 629
- FR-A- 2 775 157
- FR-A1- 2 382 848
- US-A- 4 633 659
- US-A- 5 301 495

## Description

The present invention relates to a combination of a bale forming roller for a round baler and a device for cleaning said roller.

Round balers of the fixed- or variable-chamber type are known which are suitable to collect and press all stalked farming products, such as forage, straw, grass or the like, into round bales having a variable diameter; the material to be pressed passes through an intake channel at the inlet of a compression chamber, where it encounters a plurality of rollers for forming the round bale, which turn about a substantially horizontal axis.

These forming rollers have an external surface which is suitable to entrain a considerable amount of material to be pressed against a plurality of belts, which are closed in the loop and wound around corresponding traction rollers; the forming and entrainment rollers are supported so that they can rotate within two large half-shells, which are articulated to each other about a substantially horizontal articulation axis.

Inside the chamber, the rotation of the forming rollers (and of the belts) rolls up and packs the material to be compressed into the round bale.

In order to facilitate the formation of the round bale, at least one of its forming rollers usually has a particularly aggressive outer surface, which entrains a larger quantity of material; however, it has been found that the material to be pressed into the round bale tends to become more wrapped around said forming roller, generating a compact layer of increasing thickness which compromises its functionality; moreover, part of the material tends to escape between one roller and the next, and in particular the forming roller provided with the more aggressive outer surface tends to carry toward the outside of the chamber more material than the nearby roller brings inward, with the risk of forming a dangerous clogging of material between the two rollers, to the detriment of their functionality.

FR 2 382 848 discloses a bale forming machine for picking up cut hay from a field and forming it into a cylindrical bale, that includes a wheel supported frame having a forward end adapted for attachment to a drawbar of a prime mover, a lifting arm device pivotally secured to the frame, a drum device rotatably mounted on the lifting arm device, a roller device pivotally secured to the lifting arm device, a cleaning device secured to the lifting arm device, a flexible cable device interconnected between the frame and the roller device and coacting with the ground, a comb unit laterally disposed and mounted to the lifting are device rearwardly of the drum device, and an auxiliary bale forming device pivotally secured to the frame. The cleaning device includes a cross beam secured between the two beams. Secured to the cross beam and projecting toward the drum are a plurality of arcuate spaced stubs, wherein the ends of the stubs are disposed proximate the drum for the purpose of removing any hay adhering thereto.

The aim of the present invention is to solve the problems described above, by providing a combination of a bale forming roller for a round baler and a device for cleaning said roller which is capable of keeping the surface, of the roller clean from the accumulation of material to be pressed and avoids the escape of material between successive rollers, preventing the formation of clogging, thus ensuring the functionality of the rollers.

Within this aim, an object of the invention is to provide a combination of a bale forming roller for a round baler and a device for cleaning said roller which can be installed on any type of round baler.

Another object of the invention is to provide a device which by way of its particular constructive characteristics is capable of giving the greatest assurances of reliability and safety in use.

Another object of the present invention is to provide a device that is simple, relatively easy to provide in practice, effective in operation, and furthermore competitive from an economic standpoint.

This aim and these and other objects which will become better apparent hereinafter are achieved by a combination of a bale forming roller for a round baler of the type comprising a first half-shell and a second half-shell, which are articulated to each other and form, internally a chamber for compressing the material to be pressed into the round bale and a device for cleaning said roller, said device comprising a transverse supporting element, which is rigidly coupled to fixed parts of said round baler and on which a plurality of contoured teeth are distributed, said teeth being mutually aligned and being able to engage in respective circumferential interspaces formed on said forming roller between successive pluralities of entrainment elements distributed correspondingly in an annular pattern on its outer surface, each one of said contoured teeth having a respective scraping profile which is arranged substantially so as to skim said outer surface with the tip, each one of said entrainment elements having a respective active portion for conveying the material to be pressed into said chamber, characterized in that said scraping profile is constituted by at least one straight portion, said active portion has a cross-section constituted by at least one straight portion and said scraping profile and said active portion form an angle comprised between 70 and 110°, or said scraping profile is constituted by a curved line, said active portion has a cross-section constituted by at least one straight portion and at the intersection point said active portion and the tangent to said scraping profile form an angle comprised between 70 and 110°, or said scraping profile is constituted by at least one straight portion, said active portion has a cross-section constituted by a curved line and at the intersection point said scraping profile" and the tangent to the active portion form an angle comprised between 70 and 110°, or said scraping profile is constituted by a curved line, said active portion has a cross-section constituted by a curved line and at the intersection point said scraping profile and said active portion have tangents which form an angle comprised between 70 and 110°.

Further characteristics and advantages of the invention will become better apparent from the following detailed description of a preferred but not exclusive embodiment of a cleaning device according to the invention, illustrated by way of non-limiting example in the accompanying drawings, wherein:
Figure 1 is a schematic side view, in phantom lines, of a round baler equipped with a combination of a bale forming roller and a device for cleaning said roller according to the invention;
Figure 2 is a perspective view of a cleaning device;
Figure 3 is a front view of a detail of the cleaning device;
Figure 4 is an enlarged-scale side view of a detail of the cleaning device.

With reference to the figures, the reference numeral 1 generally designates a device for cleaning a bale forming roller of a round baler.

The round baler 2 is constituted by two half-shells 2a, 2b, which form internally a chamber for compressing the material to be pressed into the round bale R, the second half-shell being articulated to the first half-shell in an upper region about an articulation axis 3; the fixed half-shell 2a has two side walls 4 and the half-shell 2b, which has two side walls 5 joined by a contoured dome, can rotate about the articulation axis 3 by way of the action of a fluid-actuated jack 6. A plurality of rollers 7 are accommodated within the half-shells 2a, 2b and are designed to drive and guide corresponding belts 8 wound thereon in a loop; the rollers 7 can rotate about respective parallel and substantially horizontal axes. The side walls 4 of the half-shell 2a support a plurality of forming rollers, for example two forming rollers 9 and 9a, which also can rotate about respective substantially horizontal parallel axes.

The cleaning device 1 is installed on at least one forming roller 9 provided with a plurality of entrainment elements 10, which are distributed on its external surface and are suitable to convey rapidly a considerable amount of material to compression, first on the belts 8 and then on the forming round bale R; for this purpose, each one of the entrainment elements 10 has an active portion 10a, which actually conveys the material into the chamber and has a cross-section constituted by at least one straight portion. As illustrated in the figures, the active portion 10a has for example a cross-section constituted by a single straight portion.

The entrainment elements 10 can have a substantially solid triangular cross-section or, as illustrated in the figures, can be each constituted for example by a plate folded so as to form a substantially V-shaped transverse cross-section, and are distributed on the outer surface of the forming roller 9 so as to form corresponding circumferential interspaces 11.

Each entrainment element 10 can be fixed rigidly, for example directly by welding, to the outer surface of the forming roller 9, or can be fixed detachably thereto by way of provided connecting means, for example of the screw type, so that it can be replaced individually and rapidly.

During the formation of the round bale R, an accumulation of fibrous material which is particularly difficult to eliminate forms around the forming rollers 9, and part of the material may also escape, as mentioned, between the rollers 9.

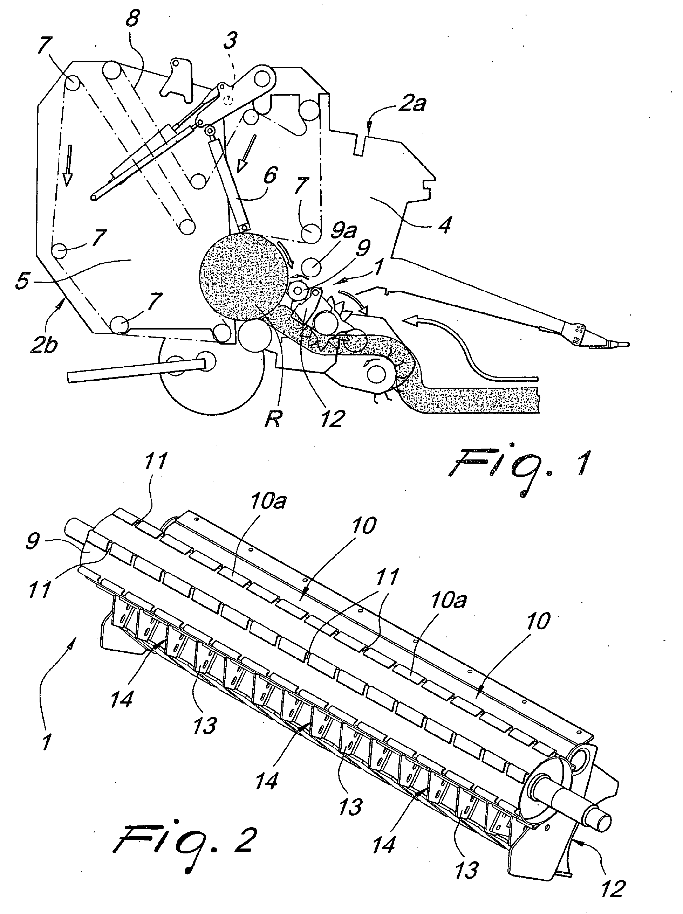

The cleaning device 1 comprises a transverse supporting element 12 (illustrated only in Figure 2 for the sake of simplicity), which is rigidly coupled to fixed parts of the round baler and in particular is fixed detachably with its ends to the side walls 4 of the half-shell 2a; a plurality of contoured teeth 13 are monolithically distributed on the supporting element 12 and enter the circumferential interspaces 11 formed on the forming roller 9 between the entrainment elements 10 distributed correspondingly on its outer surface.

The transverse supporting element 12 can be constituted for example by a housing (as shown in Figure 2) or also by a bar or by any other mechanical element (even one which is already present), so as to allow installation of the device 1 on any type of round baler.

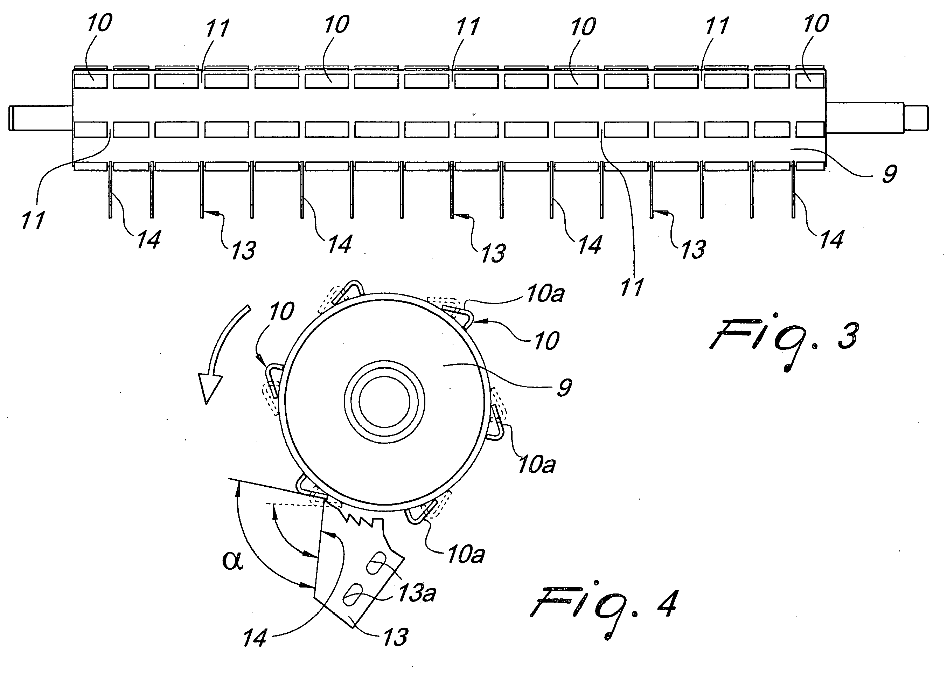

In particular, the contoured teeth 13 each have a scraping profile 14, which is arranged so as to skim, with its tip, the outer surface of the forming roller 9. The scraping profile 14 is constituted by at least one straight portion and for example (as shown in Figure 4) is constituted by a single straight portion, which is inclined at an angle α with respect to the active portion 10a of the entrainment elements 10, said angle α being comprised advantageously at all times between 70 and 110° during the rotation of the forming roller 9; conveniently, the choice of the angle α is optimized so that the removed material is returned into the compression chamber.

Naturally, the device 1 is mounted in such a manner that the teeth 13 do not protrude excessively inside the compression chamber in order to avoid interfering with the formation of the round bale R.

The teeth 13 can be associated rigidly with the supporting element 12, for example directly by welding, or can be fixed detachably thereto by way of provided connecting means, for example of the screw type, which are inserted in corresponding slots 13a of the teeth 13, so that they can be replaced individually and rapidly if necessary.

In practice, it has been found that the invention fully achieves the intended aim and obj ects, since the cleaning device 1 allows to remove from the forming roller 9 the material to be pressed which wraps around it, ensuring its functionality. The teeth 13, by way of the inclination of the scraping profile 14, advantageously allow optimum removal of the material without cutting its fibers, and conveniently send it directly to the compression chamber, with evident gains in terms of energy efficiency and forming time of the round bale R. Advantageously, the device avoids the escape of the material, and this allows to provide a roller with a surface that is more aggressive than the roller that follows it, without the risk of forming harmful cloggings of material.

Conveniently, the device can be installed on round balers of any type. Usefully, the scraping profile 14 can be constituted for example by a plurality of straight portions and so can the cross-section of the active portion 10a.

The invention thus conceived is susceptible of numerous modifications and variations, all of which are within the scope of the appended claims; in a second embodiment (not shown in the figures, but fully intuitive), the active portion 10a has a cross-section constituted by a curved line and the scraping profile 14 is constituted by at least one straight portion so that at the intersection point the scraping profile 14 and the tangent to the active portion 10a form an angle α comprised between 70 and 110° which advantageously, in relation to the specific requirements, can be constant at all times.

In a third embodiment, the scraping profile 14 is constituted by a curved line and the active portion 10a has a cross-section constituted by at least one straight portion, so that in the intersection point the active portion 10a and the tangent to said scraping profile 14 form an angle α comprised between 70 and 110°, which advantageously, in relation to the specific requirements, can be constant at all times.

In a fourth embodiment, the scraping profile 14 is constituted by a curved line and the active portion 10a has a cross-section constituted by a curved line, so that at the intersection point the scraping profile 14 and the active portion 10a have tangents which form an angle α comprised between 70 and 110°, which advantageously can be constant at all times in relation to the specific requirements.

All the details may further be replaced with other technically equivalent ones.

In the examples of embodiment that follow, individual characteristics, given in relation to specific examples, may actually be interchanged with other different characteristics that exist in other examples of embodiment.

Moreover, it is noted that anything found to be already known during the patenting process is understood not to be claimed and to be the subject of a disclaimer.

In practice, the materials used, as well as the shapes and the dimensions, may be any according to the requirements and the state of the art without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A combination of a bale forming roller for a round baler of the type comprising a first half shell and a second half-shell (2a, 2b), which are articulated to each other and form internally a chamber for compressing the material to be pressed into the round bale (R), and a device for cleaning said roller, said device comprising a transverse supporting element (12), which is rigidly coupled to fixed parts of said round baler and on which a plurality of contoured teeth (13) are distributed, said teeth being mutually aligned and being able to engage in respective circumferential interspaces (11) formed on said forming roller (9) between successive pluralities of entrainment elements (10) distributed correspondingly in an annular pattern on its outer surface, each one of said contoured teeth (13) having a respective scraping profile (14) which is arranged substantially so as to skim said outer surface with the tip, each one of said entrainment elements (10) having a respective active portion (10a) for conveying the material to be pressed into said chamber **characterized in that** said scraping profile (14) is constituted by at least one straight portion, said active portion (10a) has a cross-section constituted by at least one straight portion and said scraping profile (14) and said active portion (10a) form an angle (α) comprised between 70 and 110°, or said scraping profile (14) is constituted by a curved line, said active portion (10a) has a cross-section constituted by at least one straight portion and at the intersection point said active portion (10a) and the tangent to said scraping profile (14) form an angle (α) comprised between 70 and 110°, or said scraping profile (14) is constituted by at least one straight portion, said active portion (10a) has a cross-section constituted by a curved line and at the intersection point said scraping profile (14) and the tangent to the active portion (10a) form an angle (α) comprised between 70 and 110°, or said scraping profile (14) is constituted by a curved line, said active portion (10a) has a cross-section constituted by a curved line and at the intersection point said scraping profile (14) and said active portion (10a) have tangents which form an angle (α) comprised between 70 and 110°.

2. The combination according to claim 1, **characterized in that** said angle (α) is constant and comprised between 70 and 110°.

3. The combination according to claim 1, **characterized in that** said supporting element (12) is fixed detachably to the side walls (4) of said first fixed half-shell (2b) of said round baler.

4. The combination according to one or more of the preceding claims, **characterized in that** said teeth (13) are fixed detachably to said supporting element (12) by way of connection means which can engage corresponding slots (13a) of said teeth (13).

5. The combination according to one or more of the preceding claims, **characterized in that** said entrainment elements (10) are each constituted by a plate which is folded so as to form a substantially V-shaped transverse profile and is fixed rigidly to the outer surface of said forming roller (9).

6. The combination according to one or more of claims 1 to 4, **characterized in that** said entrainment elements (10) have a substantially solid triangular cross-section.

7. The combination according to one or more of the preceding claims, **characterized in that** said entrainment elements (10) are detachably fixed to the outer surface of said forming roller (9) by way of provided connecting means.

## Patentansprüche

1. Kombination aus einer Formwalze für eine Rundballenpresse einer Art, die eine erste Halbschale und eine zweite Halbschale (2a, 2b) aufweist, die zueinander schwenkbar sind und im Innern eine Kammer zum Zusammenpressen des in einen runden Ballen (R) zu pressenden Materials bilden, und einer Vorrichtung zum Reinigen der Walze, wobei die Vorrichtung ein transversales Trägerelement (12) enthält, das starr mit feststehenden Teilen der Rundballenpresse gekoppelt ist und auf dem eine Mehrzahl von profilierten Zähnen (13) verteilt sind, die zueinander ausgerichtet und in der Lage sind, in entsprechende Umfangszwischenräume (11) einzugreifen, die auf der Formwalze (9) zwischen mehreren aufeinander folgenden Mitnahmeelementen (10) geformt sind, die in entsprechender Weise in einem ringförmigen Muster auf ihr verteilt sind, wobei jeder der profilierten Zähne (13) ein entsprechendes Schabprofil (14) aufweist, das im Wesentlichen so ausgebildet ist, dass es die äußere Fläche mit der Spitze abschabt, und wobei jedes der Mitnahmeelemente (10) einen entsprechenden aktiven Abschnitt (10a) zum Fördern des zu pressenden Materials in die Kammer hat, **dadurch gekennzeichnet,**
**dass** das Schabprofil (14) aus mindestens einem geraden Abschnitt besteht, der aktive Abschnitt (10a) einen Querschnitt aufweist, der durch mindestens einen geraden Abschnitt gebildet wird, und das Schabprofil (14) und der aktive Abschnitt (10a) einen Winkel (α) zwischen 70 und 110° bilden, oder
**dass** das Schabprofil (14) aus einer Kurvenlinie besteht, der aktive Abschnitt (10a) einen Querschnitt aufweist, der durch mindestens eine geraden Abschnitt gebildet wird, und am Schnittpunkt der aktive Abschnitt (10a) und die Tangente des Schabprofils (14) einen Winkel (α) zwischen 70 und 110° bilden, oder
**dass** das Schabprofil (14) aus mindestens einem geraden Abschnitt besteht, der aktive Abschnitt (10a) einen Querschnitt aufweist, der durch eine Kurvenlinie gebildet wird, und am Schnittpunkt das Schabprofil (14) und die Tangente des aktiven Abschnitts (10a) ein Winkel (α) zwischen 70 und 110° bilden, oder
**dass** das Schabprofil (14) aus einer Kurvenlinie besteht, der aktive Abschnitt (10a) einen Querschnitt aufweist, der durch eine Kurvenlinie gebildet wird, und am Schnittpunkt das Schabprofil (14) und der aktive Abschnitt (10a) Tangenten aufweisen, die einen Winkel (α) zwischen 70 und 110° bilden.

2. Kombination nach Anspruch 1, **dadurch gekennzeichnet, dass** der Winkel (α) konstant ist und zwischen 70 und 110° liegt.

3. Kombination nach Anspruch 1, **dadurch gekennzeichnet, dass** das Trägerelement (12) abnehmbar an den Seitenwänden (4) der ersten Halbschale (2b) der Rundballenpresse befestigt ist.

4. Kombination nach einem oder mehreren der vorhergehenden Ansprüche, **dadurch gekennzeichnet, dass** die Zähne (13) abnehmbar an dem Trägerelement (12) befestigt sind durch Verbindungsmittel, die in die entsprechenden Schlitze (13a) der Zähne (13) eingreifen können.

5. Kombination nach einem oder mehreren der vorhergehenden Ansprüche, **dadurch gekennzeichnet, dass** die Mitnahmeelemente (10) jeweils durch eine Platte gebildet werden, die zu einem im Wesentlichen V-förmigen Querprofil gefaltet und starr an der Außenfläche der Formwalze (9) befestigt ist.

6. Kombination nach einem oder mehreren der Ansprüche 1 bis 4, **dadurch gekennzeichnet, dass** die Mitnahmeelemente (10) einen im Wesentlichen vollen dreieckigen Querschnitt aufweisen.

7. Kombination nach einem oder mehreren der vorhergehenden Ansprüche, **dadurch gekennzeichnet, dass** die Mitnahmeelemente (10) durch vorgesehene Verbindungsmittel abnehmbar an der Außenfläche der Formwalze (9) befestigt sind.

## Revendications

1. Combinaison d'un rouleau formateur de balles pour presse à balles rondes du type comprenant une première demi-coque et une seconde demi-coque (2a, 2b), qui sont articulées l'une avec l'autre et forment intérieurement une chambre pour comprimer le matériau à presser en balle ronde (R), et un dispositif pour nettoyer ledit rouleau, ledit dispositif comprenant un élément de support transversal (12), qui est couplé de manière rigide à des parties fixes de ladite presse à balles rondes et sur lequel est distribuée une pluralité de dents profilées (13), lesdites dents étant mutuellement alignées et étant à même de s'engager dans des espaces intermédiaires circonférentiels respectifs (11) formés sur ledit rouleau formateur (9) entre des pluralités successives d'éléments d'entraînement (10) distribuées en correspondance en motif annulaire sur sa surface externe, chacune desdites dents profilées (13) ayant un profil de raclage respectif (14) qui est aménagé sensiblement afin d'effleurer ladite surface externe avec la pointe, chacun desdits éléments d'entraînement (10) ayant une partie active respective (10a) pour transporter le matériau à presser dans ladite chambre, **caractérisée en ce que** ledit profil de raclage (14) est constitué d'au moins une portion droite, ladite partie active (10a) a une coupe transversale constituée d'au moins une partie droite et ledit profil de raclage (14) et ladite partie active (10a) forment un angle (α) compris entre 70 et 110°, ou ledit profil de raclage (14) est constitué d'une ligne incurvée, ladite partie active (10a) a une coupe transversale constituée d'au moins une partie droite et, au point d'intersection, ladite partie active (10a) et la tangente audit profil de raclage (14) forment un angle (α) compris entre 70 et 110°, ou ledit profil de raclage (14) est constitué d'au moins une partie droite, ladite partie active (10a) a une coupe transversale constituée d'une ligne incurvée et, au point d'intersection, ledit profil de raclage (14) et la tangente à la partie active (10a) forment un angle (α) compris entre 70 et 110°, ou ledit profil de raclage (14) est constitué d'une ligne incurvée, ladite partie active (10a) a une coupe transversale constituée d'une ligne incurvée et, au point d'intersection, ledit profil de raclage (14) et ladite partie active (10a) ont des tangentes qui forment un angle (α) compris entre 70 et 110°.

2. Combinaison selon la revendication 1, **caractérisée en ce que** ledit angle (α) est constant et est compris entre 70 et 110°.

3. Combinaison selon la revendication 1, **caractérisée en ce que** ledit élément de support (12) est fixé de manière détachable aux parois latérales (4) de ladite première demi-coque fixe (2b) de ladite presse à balles rondes.

4. Combinaison selon une ou plusieurs des revendications précédentes, **caractérisée en ce que** lesdites dents (13) sont fixées de manière détachable audit élément de support (12) à l'aide de moyens de raccordement qui peuvent s'engager dans des fentes correspondantes (13a) desdites dents (13).

5. Combinaison selon une ou plusieurs des revendications précédentes, **caractérisée en ce que** lesdits éléments d'entraînement (10) sont chacun constitués d'une plaque qui est pliée de manière à former un profil transversal sensiblement en forme de V et est fixé de manière rigide à la surface externe dudit rouleau formateur (9).

6. Combinaison selon une ou plusieurs des revendications 1 à 4, **caractérisée en ce que** lesdits éléments d'entraînement (10) ont une coupe transversale triangulaire sensiblement pleine.

7. Combinaison selon une ou plusieurs des revendications précédentes, **caractérisée en ce que** lesdits éléments d'entraînement (10) sont fixés de manière détachable à la surface externe dudit rouleau formateur (9) à l'aide de moyens de raccordements mis en oeuvre.
